# EUROPEAN PATENT SPECIFICATION

(11) **EP 3 452 396 B1**
(45) Date of publication and mention of the grant of the patent: **20.10.2021**
(21) Application number: 16720149.0
(22) Date of filing: 04.05.2016
(51) Int. Cl.: B66B 1/34, B66B 1/40

(54) **SYSTEM AND METHOD FOR ENHANCING ELEVATOR POSITIONING**
SYSTEM UND VERFAHREN ZUR VERBESSERUNG DER AUFZUGPOSITIONIERUNG
SYSTÈME ET PROCÉDÉ D'AMÉLIORATION DE POSITIONNEMENT D'ASCENSEUR

(43) Date of publication of application: 13.03.2019
(73) Proprietor: KONE Corporation, 00330 Helsinki (FI)
(72) Inventor: SAARELA, Sami, 00330 Helsinki (FI); HAIKONEN, Aki, 00330 Helsinki (FI); MÄKELÄ, Klaus, 00330 Helsinki (FI); AHONIEMI, Sakke, 00330 Helsinki (FI)
(74) Representative: K & H Bonapat Patentanwälte Koch · von Behren & Partner mbB
(86) International application number: PCT/EP2016/060011
(87) International publication number: WO 2017/190778

(56) References cited:
- JP-A- 2007 145 475

## Description

### FIELD OF THE INVENTION

The invention relates to a device and a method for enhancing elevator positioning, especially levelling of elevator cars at landings.

### BACKGROUND OF THE INVENTION

Every time an elevator stops and opens the doors, the floor of the elevator car should be levelled with the floor of the landing so that no step occurs. Such step may cause entering or leaving passengers to trip and may result in injuries of the passengers. In addition, persons having difficulties in walking or are dependent on walking frames or wheelchairs may be seriously affected by steps occurring while entering an elevator car.

There are known systems used for elevator positioning against landings, since every elevator requires some kind of a positioning system to be able to operate.

These systems provide the disadvantage that they use mechanical sensors or light barriers that regulate levelling of the elevator cars, however, if one of these sensors is not positioned correctly, de-positioned or broken, poor levelling may occur resulting in steps to or from the elevator floor to the landing floor.

In JP 2007 145475 A, it is described that in addition to the detection of the landing error in a floor surface of a car of the elevator and a floor surface of a landing hall by measuring an output signal of a position detector arranged in an electric motor or hoisting machine of the elevator up to stopping the car after detecting a position detecting plate arranged on a hoistway wall surface, at least two imaging devices are arranged in the car for performing three dimensional measurement of the car floor and the landing floor in order to measure the landing error.

### AIM OF THE INVENTION

The aim of the present invention is to disclose a solution, which eliminates or at least alleviates the one or more of the drawbacks occurring in prior-art solutions presented above, and to disclose an elevator system which is optimized in regard to the prior art, especially in regard to enable an enhanced levelling accuracy and removing risks caused by poor levelling.

The invention especially also enables to keep an elevator system operational even in the case of broken or de-positioned components used for levelling elevator cars. In addition, the present invention may be used to detect and count passengers using an elevator.

### SUMMARY OF THE INVENTION

The device and the method according to the invention and preferred embodiments are characterized by the claims.

The system for enhancing elevator positioning according to the invention comprises a camera system designed to record pictures and a computer system designed to determine an absolute distance of at least one element of the recorded pictures or a relative distance between two elements of the recorded pictures, wherein the device is designed to determine the relative distance between the floor of an elevator car and the floor of a landing.

The method for enhancing elevator positioning according to the invention comprises the steps:
- recording pictures of the floor of an elevator car and the floor of a landing with the camera system,
- determining with the computer system an absolute distance of the floor of an elevator car and/or the floor of a landing or a relative distance between the floor of an elevator car and the floor of a landing.

Camera systems are well known. According to the invention, a single camera is used. Preferred are camera systems that provide two stereoscopic pictures or distance information (plenoptic (light-field) camera or 3D-camera).

The cameras must be arranged such that they at least record pictures of the floor that is moving relative to the camera (cameras arranged at the landing floor record at least the floor of an elevator car, cameras in an elevator car record at least the floor of the landings), and/or at least such that they record marks that unambiguously indicate the location of said floor. The combination of recording at least one mark (e.g. at the walls) and at least one floor, wherein the mark indicates the position of the respective floor offers the advantage that if the mark is eventually hidden or the floor cannot be seen due to an obstacle standing there, the system can still measure the levelling condition due to the redundant measurements.

The camera is especially positioned at floor level of one floor (car-floor or landing-floor) and recording the opposite floor (landing-floor or car-floor). Preferred is an embodiment, where the camera of the camera system is positioned above the doors of a landing floor or an elevator car and is aimed down towards the floor, especially straight down or at least under an angle of less than 30° (or less than 10°) to the vertical direction.

In a preferred embodiment the camera begins recording images, and/or the system begins image analyzing, as soon as the doors start to open.

Computer systems are well known. They comprise processors or controllers together with a RAM and especially a non-volatile memory. Also the method of object recognition in pictures is known. The computer system is designed to recognize the floor of an elevator car and/or the floor of a landing, the edge between these floors, or at least above mentioned marks indicating the position of said floors.

Although it is possible to record only one floor (car-floor or landing-floor), at least as long as the distance of the other floor to the camera is known, it is preferred that the camera system is able to record both floors to reduce errors. According to the invention, one camera records both floors after the opening of the doors, wherein the position of the camera is inside the car or outside the levelling door and the computer system measures the dimensions of the edge between the two floors. If the breadth of the edge in a 2D-picture is smallest (or below a predefined value), both floors are exactly levelled, if the edge is not smallest (or above said predefined value) one floor is higher than the other floor.

By using a higher evolved camera (e.g. plenoptic camera or 3D-camera) the relative distance of the floors can be measured and the levelling of the floors can be calculated by using the measured distance.

In a preferred embodiment, the computer system is designed to store reference images of each landing to compare current images against the reference images. When the system then detects a deviation either between car floor and landing floor or current image against reference image at that specific landing, the computer system concludes that the elevator is poorly levelled.

In a preferred embodiment the system for enhancing elevator positioning comprises the elevator system or is at least designed to be included in an elevator system, wherein the camera system is designed to be positioned at the doors of the elevator system. The camera system is preferably located at at least one door area of an elevator system either on the car side or landing side. Preferably, the camera system is positioned inside the car, providing the advantage that only one camera system has to be used to control many different floors.

As preferred alternative, the camera system is positioned at the door of a landing, providing the advantage that only one camera system has to be used to control many different cars of a multi-car-elevator.

In a preferred embodiment, the system is designed to detect and/or count passengers entering or leaving an elevator car.

In a preferred embodiment, the system comprises a known, camera-based passenger detector system with its passenger detecting shape recognition software. To achieve the aim of the present invention, that system has to be modified in that it recognizes the car floor and/or the landing floors (relative distance between these two floors).

It is preferred that the analysis of the correctness of the levelling will happen in the first moments of the door opening to prevent persons entering or leaving a poorly levelled elevator car. The time between the beginning of door opening and analysing the levelling condition by the system is especially shorter than 10 seconds, preferably shorter than 5 seconds. It is preferred that at the end of the analysis of the levelling by the system the elevator doors are not completely open but have especially opened less than 50 cm or even less than 10 cm. In the case of poor levelling it is preferred that the elevator is controlled not to open the doors further, but to close the doors and preferably to move to an adjacent floor, or to move slowly to a position where a correct levelling is assumed. By measuring the distances of the floors the computer system is also able to provide the correct levelling position of the elevator and may send the correct moving distance to the elevator system. This will prevent boarding or leaving of passengers in poor levelling situations.

In a preferred embodiment, the system also comprises acoustic or optic warning means (e.g. selected from the group sirens, beepers, loudspeakers, displays and lights), where especially the respective means of the elevator system are used. When poor levelling is detected, this embodiment will warn passengers immediately e.g. by a repeating warning beep and also possibly by texts in COP or others displays in car.

In a preferred embodiment, information of being poorly levelled, is transmitted to the elevator control system together with the landing number and/or car number where poor levelling occurred. If the elevator control system is unable to determine the exact elevator position, (elevator car too low or too high), The system of the invention may assist, as said above with the calculated moving distance of the car or the elevator system may do re-levelling by trial and error, i.e. the elevator control system will move the elevator car very slowly in one direction and see if the levelling information through the system of the invention is improved or worsened. After re-levelling, the doors can be opened again and measuring is accomplished while the doors are still opening, if the elevator car is still badly levelled, the system can compare this measurement with the last measurement to detect if the levelling has been improved or worsened and can recursively (with maybe more measuring steps) calibrate the elevator car at a good levelling position.

In a preferred embodiment, the system will generate a service need message to the elevator control system (e.g. via Kone Remote Monitoring System) to get the next planned maintenance visit closer.

In a preferred embodiment, a detection of a first poor levelling will trigger a "limp mode" which allows an elevator to move between all other landings except the one, where poor levelling was detected. In this embodiment, the system of the invention would detect abnormal levelling behaviour in a landing and will interpret this in that some component at that landing is causing levelling problems. The elevator would preferably not operate at that landing until a maintenance would have taken place. This is especially applicable for older elevator systems where a re-levelling is not possible.

In a further preferred embodiment that is especially advantageous in the case where one or more floors have been detected to have poor levelling or if an elevator car has been detected to be the reason for poor levelling, the elevator car is parked to await maintenance, preferably at a predefined parking position. Thus, the system is designed to comprise a predefined parking position and to comprise a moving routine to move the elevator car to this predefined parking position.

### LIST OF FIGURES

In the following, the invention will be described in detail by the aid of examples of its embodiments, wherein:
Fig. 1 outlines a preferred system.
Fig. 2 outlines the method of the invention.

### DETAILED DESCRIPTION OF THE INVENTION

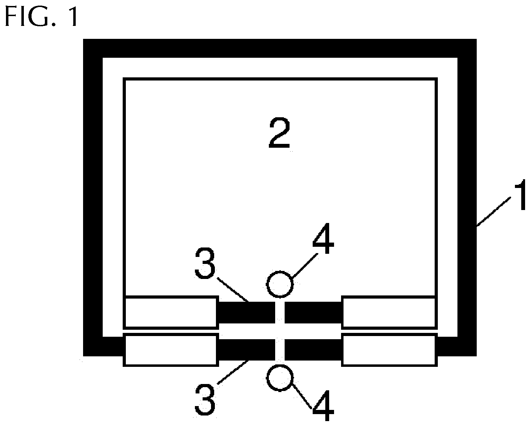

Figure 1 shows an elevator car 2 in an elevator shaft 1, where the doors 3 of the elevator car are opposite the doors 3 of a landing, which is a situation where the elevator car 2 stops at the landing or reaches the landing. The circles 4 mark possible positions of a camera of the system. A camera could be installed in the position of the circle 4 in the elevator car 2 or outside the elevator car 2 at the landing. In general, all positions, where the floors can be recorded when opening the doors 3 are possible positions for cameras.

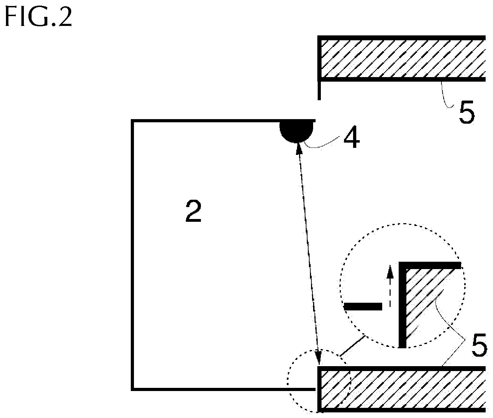

Figure 2 outlines the method of the invention. Here a camera is arranged at the position of the semi circle 4 at the ceiling of the elevator car, that possibly may be centred regarding the doors (not shown here) as shown in figure 1 (inner circle 4 of figure 1). The arrow directing to and from the semi-circle 4 should refer to the line of sight of the camera. Surely, the downward arrow points just at the centre of the recorded image that shows the floor of the elevator car and the floor of the landing 5. When opening the doors, the camera starts to record images of said floors, especially together with distance information. As shown in figure 2 (enlarged picture of the edge), the elevator is poorly levelled, since there is a step between the floor of the elevator car and the floor of the landing. By using only one camera, this step is seen as an edge between the two floors that is broader than the edge would be in a perfect levelled situation. If using a stereoscopic camera, the step would appear in the stereoscopic images, if using a 3D-camera, the different distances of the car-floor and the landing-floor at their facing edges would be measured.

By moving the elevator car slowly in the direction of the broken arrow (in the broken circle of the enlargement) the car can be levelled again.

This figure makes it also clear why it is possible to measure only the distance of the floor that is moving relative to the camera (here landing-floor), since the distance of the floor not moving relative to the camera (here car-floor) is constant and may, therefore, be present as a predefined value in the computer system.

## Claims

1. System for enhancing elevator positioning, wherein it comprises a camera system designed to record pictures and a computer system designed to determine an absolute distance of at least one element of the recorded pictures or a relative distance between two elements of the recorded pictures, wherein the device is designed to determine the relative distance between the floor of an elevator car (2) and the floor of a landing (5), **characterized in that** the camera system comprises a single camera.

2. System as claimed in claim 1, **characterized in that** the camera system comprises a plenoptic camera or a 3D-camera.

3. System as claimed in one of the preceding claims, **characterized in that** the camera of the camera system is positioned above the doors (3) of a landing floor or an elevator car (2) and is aimed down towards the floor, especially straight down or at least under an angle of less than 30° to the vertical direction.

4. System as claimed in one of the preceding claims, **characterized in that** the computer system is designed to store reference images of each landing (5) to compare current images against the reference images, wherein the computer system is designed to conclude a poor levelling when the system detects a deviation either between car floor and landing floor or current image against reference image at that specific landing (5).

5. System as claimed in one of the preceding claims, **characterized in that** the system comprises a camera-based passenger detector system with its passenger detecting shape recognition software, wherein the system is modified that it recognizes the car floor and/or the landing floors.

6. System as claimed in one of the preceding claims, **characterized in that** it additionally comprises acoustic or optic warning means, preferably means selected from the group sirens, beepers, loudspeakers, displays and lights, where especially the respective means of the elevator system are used.

7. Method for enhancing elevator positioning with a system according to one of the preceding claims comprising the steps:
- recording pictures of the floor of an elevator car (2) and the floor of a landing (5) with the camera system,
- determining with the computer system an absolute distance of the floor of an elevator car (2) or the floor of a landing (5) or a relative distance between the floor of an elevator car (2) and the floor of a landing (5).

8. Method as claimed in claim 7, **characterized in that** the camera records both floors after an opening of the doors, wherein a position of the camera is inside the car (2) or outside a levelling door (3) and the computer system measures the dimensions of an edge between the two floors, wherein, if a breadth of the edge in a 2D-picture is smallest or below a predefined value, both floors are levelled, and, if the edge is not smallest or above the predefined value, one floor is higher than the other floor.

9. Method as claimed in claim 7 or claim 8, **characterized in that** the camera begins recording images, or the system begins image analyzing, as soon as the doors (3) start to open, wherein the time between the beginning of door opening and analysing the levelling condition by the system is especially shorter than 10 seconds, and/or wherein the doors (3) have especially opened less than 50 cm.

10. Method as claimed in claim 9, **characterized in that** information of being poorly levelled is transmitted to an elevator control system together with the landing number and/or car number where poor levelling occurred and/or the elevator is controlled not to open the doors (3) further, but to close the doors (3) and preferably to move to an adjacent floor, or to move slowly to a position where a correct levelling is assumed, wherein in the case where one or more floors have been detected to have poor levelling or if an elevator car (2) has been detected to be the reason for poor levelling, the elevator car (2) is parked to await maintenance, preferably at a predefined parking position.

11. Elevator system, **characterized in that** it is provided with the system as claimed in one of claims 1 to 6.

## Patentansprüche

1. System zum Verbessern einer Aufzugspositionierung, wobei es ein Kamerasystem umfasst, das ausgelegt ist, Bilder aufzunehmen, und ein Computersystem, das ausgelegt ist, einen absoluten Abstand von mindestens einem Element der aufgenommenen Bilder oder einen relativen Abstand zwischen zwei Elementen der aufgenommenen Bilder zu bestimmen, wobei die Vorrichtung ausgelegt ist, den relativen Abstand zwischen dem Boden einer Aufzugskabine (2) und dem Boden eines Stockwerks (5) zu bestimmen, **dadurch gekennzeichnet, dass** das Kamerasystem eine einzelne Kamera umfasst.

2. System wie in Anspruch 1 beansprucht, **dadurch gekennzeichnet, dass** das Kamerasystem eine plenoptische Kamera oder eine 3D-Kamera umfasst.

3. System wie in einem der vorhergehenden Ansprüche beansprucht, **dadurch gekennzeichnet, dass** die Kamera des Kamerasystems über den Türen (3) eines Stockwerks oder einer Aufzugskabine (2) positioniert ist und nach unten auf den Boden gerichtet ist, insbesondere gerade nach unten oder zumindest unter einem Winkel von weniger als 30° zu der vertikalen Richtung.

4. System wie in einem der vorhergehenden Ansprüche beansprucht, **dadurch gekennzeichnet, dass** das Computersystem ausgelegt ist, Referenzaufnahmen jedes Stockwerks (5) zu speichern, um aktuelle Aufnahmen mit den Referenzaufnahmen zu vergleichen, wobei das Computersystem ausgelegt ist, auf eine schlechte Nivellierung zu schließen, wenn das System eine Abweichung entweder zwischen dem Kabinenboden und dem Stockwerkboden oder der aktuellen Aufnahme gegen die Referenzaufnahme an diesem spezifischen Stockwerk (5) detektiert.

5. System wie in einem der vorhergehenden Ansprüche beansprucht, **dadurch gekennzeichnet, dass** das System ein kamerabasiertes Passagierdetektionssystem mit seiner passagierdetektierenden Formerfassungssoftware umfasst, wobei das System so modifiziert ist, dass es den Kabinenboden und/oder die Stockwerkböden erkennt.

6. System wie in einem der vorhergehenden Ansprüche beansprucht, **dadurch gekennzeichnet, dass** es zusätzlich akustische oder optische Warnmittel umfasst, bevorzugt Mittel ausgewählt aus der Gruppe Sirenen, Piepser, Lautsprecher, Anzeigen und Lichter, wobei insbesondere die jeweiligen Mittel des Aufzugssystems Verwendung finden.

7. Verfahren zur Verbesserung einer Aufzugspositionierung mit einem System nach einem der vorhergehenden Ansprüche, umfassend die Schritte:
- Aufnehmen von Bildern des Bodens einer Aufzugskabine (2) und des Bodens eines Stockwerks (5) mit dem Kamerasystem,
- Bestimmen einer absoluten Entfernung des Bodens einer Aufzugskabine (2) oder des Bodens eines Stockwerks (5) oder einer relativen Entfernung zwischen dem Boden einer Aufzugskabine (2) und dem Boden eines Stockwerks (5) mit dem Computersystem.

8. Verfahren wie in Anspruch 7 beansprucht, **dadurch gekennzeichnet, dass** die Kamera beide Böden nach einem Öffnen der Türen aufnimmt, wobei sich eine Position der Kamera innerhalb der Kabine (2) oder außerhalb einer Nivellierungstür (3) befindet und das Computersystem die Abmessungen einer Kante zwischen den beiden Böden misst, wobei, wenn eine Breite der Kante in einem 2D-Bild am kleinsten ist oder unter einem vordefinierten Wert liegt, beide Böden nivelliert sind, und, wenn die Kante nicht am kleinsten ist oder über dem vordefinierten Wert liegt, ein Boden höher als der andere Boden ist.

9. Verfahren wie in Anspruch 7 oder 8 beansprucht, **dadurch gekennzeichnet, dass** die Kamera mit der Aufzeichnung von Aufnahmen oder das System mit der Bildauswertung beginnt, sobald die Türen (3) sich zu öffnen beginnen, wobei die Zeit zwischen dem Beginnen der Türöffnung und dem Auswerten des Nivellierungszustandes durch das System insbesondere kürzer als 10 Sekunden ist und/oder wobei die Türen (3) sich insbesondere weniger als 50 cm geöffnet haben.

10. Verfahren wie in Anspruch 9 beansprucht, **dadurch gekennzeichnet, dass** eine Information, dass der Aufzug schlecht nivelliert ist, zusammen mit der Stockwerksnummer und/oder Kabinennummer, mit der eine schlechte Nivellierung aufgetreten ist, an ein Aufzugssteuerungssystem übermittelt wird und/oder der Aufzug gesteuert wird, die Türen (3) nicht weiter zu öffnen, sondern die Türen (3) zu schließen und bevorzugt auf eine benachbarte Etage zu fahren, oder sich langsam in eine Position zu bewegen, in der eine korrekte Nivellierung angenommen wird, wobei in dem Fall, in dem bei einer oder mehreren Etagen eine schlechte Nivellierung detektiert worden ist oder falls eine Aufzugskabine (2) als Grund für eine schlechte Nivellierung detektiert worden ist, die Aufzugskabine (2) geparkt wird, um auf eine Wartung zu warten, vorzugsweise an einer vordefinierten Parkposition.

11. Aufzugssystem, **dadurch gekennzeichnet, dass** es mit dem System wie in einem der Ansprüche 1 bis 6 beansprucht versehen ist.

## Revendications

1. Système destiné à améliorer le positionnement d'ascenseur, lequel système comprenant un système de caméra conçu pour enregistrer des images et un système d'ordinateur conçu pour déterminer une distance absolue d'au moins un élément des images enregistrées ou une distance relative entre deux éléments des images enregistrées, dans lequel le dispositif est conçu pour déterminer la distance relative entre le plancher d'une cabine d'ascenseur (2) et le plancher d'un palier (5), **caractérisé en ce que** le système de caméra comprend une seule caméra.

2. Système selon la revendication 1, **caractérisé en ce que** le système de caméra comprend une caméra plénoptique ou une caméra 3D.

3. Système selon une quelconque des revendications précédentes, **caractérisé en ce que** la caméra du système de caméra est positionnée au-dessus des portes (3) d'un plancher de palier ou d'une cabine d'ascenseur (2) et est dirigée vers le bas vers le plancher, en particulier directement vers le bas ou au moins sous un angle inférieur à 30° par rapport à la direction verticale.

4. Système selon une quelconque des revendications précédentes, **caractérisé en ce que** le système d'ordinateur est conçu pour stocker des images de référence de chaque palier (5) pour comparer des images actuelles à des images de référence, le système d'ordinateur étant conçu pour conclure à une mauvaise mise à niveau lorsque le système détecte un écart soit entre le plancher de cabine et le plancher de palier soit de l'image actuelle par rapport à l'image de référence au niveau de ce palier spécifique (5).

5. Système selon une quelconque des revendications précédentes, **caractérisé en ce que** le système comprend un système de détecteur de passage basé sur une caméra avec son logiciel de reconnaissance de forme de détection de passager, le système étant modifié **en ce qu'**il reconnaît le plancher de cabine et/ou les planchers de palier.

6. Système selon une quelconque des revendications précédentes, **caractérisé en ce qu'**il comprend de plus des moyens d'avertissement acoustique ou optique, de préférence des moyens choisis dans le groupe constitué par des sirènes, des téléavertisseurs, des affichages et des lumières, où les moyens respectifs du système d'ascenseur sont en particulier utilisés.

7. Procédé destiné à améliorer le positionnement d'ascenseur avec un système selon une des revendications précédentes comprenant les étapes de :
enregistrement d'images du plancher d'une cabine d'ascenseur (2) et du plancher d'un palier (5) avec le système de caméra,
détermination avec le système d'ordinateur d'une distance absolue du plancher d'une cabine d'ascenseur (2) ou du plancher d'un palier (5) ou d'une distance relative entre le plancher d'une cabine d'ascenseur (2) et le plancher d'un palier (5).

8. Procédé selon la revendication 7, **caractérisé en ce que** la caméra enregistre à la fois des planchers après une ouverture des portes, une position de la caméra étant à l'intérieur de la cabine (2) ou à l'extérieur d'une porte de mise à niveau (3) et le système d'ordinateur mesurant les dimensions d'un bord entre les deux planchers, dans lequel, lorsque une largeur du bord dans une image 2D est la plus petite ou inférieure à une valeur prédéfinie, les deux planchers sont mis à niveau, et, lorsque le bord n'est pas le plus petit ou est au-dessus de la valeur prédéfinie, un plancher est plus haut que l'autre plancher.

9. Procédé selon la revendication 7 ou la revendication 8, **caractérisé en ce que** la caméra commence à enregistrer des images, ou le système commence l'analyse des images, dès que les portes (3) commencent à s'ouvrir, la durée entre le début de l'ouverture de portes et l'analyse des conditions de mise à niveau par le système étant en particulier inférieure à 10 secondes, et/ou les portes (3) étant en particulier ouvertes de moins de 50 cm.

10. Procédé selon la revendication 9, **caractérisé en ce que** des informations d'une mauvaise mise à niveau sont transmises à un système de commande d'ascenseur conjointement avec le numéro de palier et/ou le numéro de cabine où la mauvaise mise à niveau s'est produite et/ou l'ascenseur est commandé pour ne pas continuer à ouvrir les portes (3), mais pour fermer les portes (3) et de préférence pour se déplacer vers un plancher adjacent, ou se déplacer lentement vers une position où une mise à niveau correcte est supposée, dans lequel dans le cas où un ou plusieurs planchers ont été détectés comme ayant une mauvaise mise à niveau ou lorsque une cabine d'ascenseur (2) a été détectée comme étant la raison de la mauvaise mise à niveau, la cabine d'ascenseur (2) est stationnée pour attendre la maintenance, de préférence au niveau d'une position de stationnement prédéfinie.

11. Système d'ascenseur, **caractérisé en ce qu'**il est muni du système selon une quelconque des revendications 1 à 6.
